# EUROPÄISCHE PATENTSCHRIFT

(11) **EP 2 703 788 B1**
(45) Veröffentlichungstag und Bekanntmachung des Hinweises auf die Patenterteilung: **04.01.2017**
(21) Anmeldenummer: 13176692.5
(22) Anmeldetag: 16.07.2013
(51) Int. Cl.: G01F 25/00, B67D 7/78

(54) **Ausliterungsvorrichtung und Verfahren zur Kalibrierung von Kammern eines Tanks**
Metering device and method for calibrating chambers of a tank
Dispositif de vidange de liquide et procédé de calibrage de chambres d'une citerne

(30) Priorität: 17.07.2012 DE 102012212497
(43) Veröffentlichungstag der Anmeldung: 05.03.2014
(73) Patentinhaber: IF Holding GmbH, 94557 Niederalteich (DE)
(72) Erfinder: Decker, Nico, 94469 Deggendorf (DE)
(74) Vertreter: advotec.

(56) Entgegenhaltungen:
- WO-A1-2004/106218
- WO-A1-2010/012409
- DE-A1- 10 207 842
- US-A- 2 548 431
- US-A- 3 057 518

## Beschreibung

Die Erfindung betrifft eine Auslitervorrichtung nach dem Oberbegriff des Patentanspruchs 1 und ein Verfahren zur Kalibrierung von Kammern eines Tanks mittels einer derartigen Auslitervorrichtung.

Auslitervorrichtungen sind aus der Praxis bekannt und dienen dazu, einzelne Kammern eines Tanks, beispielsweise eines Tanks eines Tankfahrzeugs für den Einsatz von Peilstäben in den Kammern zu kalibrieren. WO2004106218 A1 beschreibt eine Flüssigkeitsliefervorrichtung bzw. einen Tankwagen. DE10207842 A1 beschriebt eine Auslitervorrichtung für einen Tank. Bei der Kalibrierung wird also bestimmt, bei welchem Füllstand welches Flüssigkeitsvolumen in der betreffenden Kammer des Tanks enthalten ist. Mit den bekannten Auslitervorrichtungen ist es lediglich möglich, eine Kammer des Tanks im Automatikbetrieb zu kalibrieren bzw. auszulitern. Ein Umpumpen der Flüssigkeit in weitere Kammern des Tanks und das Vorbereiten der Ausliterung bzw. Kalibrierung erfolgt in manueller Weise, das heißt durch eine Bedienperson.

Eine Ausliterung bzw. Kalibrierung der einzelnen Kammern des Tanks ist erforderlich, da die Kammern in der Praxis von der zugrundeliegenden Konstruktionszeiehnung abweichen. Es ist daher erforderlich, im Wege der Ausliterung bzw. Kalibrierung für den eingesetzten Füllstandsmesser bzw. Peilstab eine Kennlinie bzw. Peiltabelle zu erstellen. Nur auf diese Weise kann für jede Kammer stets eine hinreichend genaue Füllmengenangabe gemacht werden.

Die Kammern des Tanks haben in der Regel ein Bodenventil, über das die jeweilige Kammer von einer Rohrleitung abtrennbar ist, die zu einem Anschlussstutzen führt, über den die Kammer entleerbar ist. Der Anschlussstutzen umfasst in der Regel eine Kupplung zum Anschluss eines Schlauches bzw. einer Rohrleitung. Das Bodenventil der Kammer kann pneumatisch betrieben und von einer Steuereinrichtung betätigt werden, die tankseitig vorgesehen ist.

Bisherige Auslitervorrichtungen umfassen einen Ausliterstand, der eine Versorgungs- bzw. Zufuhrleitung aufweist, die mit dem Anschluss- bzw. Auslassstutzen der betreffenden Kammer des auszuliternden Tanks verbunden werden kann. Stromab der Versorgungsleitung ist eine Volumenmesseinrichtung angeordnet, mittels deren das Volumen der aus der jeweiligen Tankkammer entnommenen Flüssigkeit bestimmt werden kann. Stromab der Volumenmesseinrichtung ist eine Rücklaufleitung angeordnet, die mit einer zweiten Kammer des Tanks verbunden werden kann, so dass die der ersten Kammer entnommene Flüssigkeit direkt der zweiten Kammer zugeführt werden und nach der Kalibrierung der ersten Kammer eine Kalibrierung der zweiten Kammer erfolgen kann. Alternativ kann die Rücklaufleitung auch mit einem Vorratstank verbunden werden, aus dem die Flüssigkeit für spätere Kalibrierungen entnommen werden kann.

Des Weiteren umfasst der bekannte Ausliterstand eine Kontrolleinheit bzw. Steuereinheit, die die Komponenten des Ausliterstandes steuert und den automatischen Teil der Kalibrierung durchführt. Die Steuereinheit ist zur Erstellung einer Peiltabelle auch mit dem innerhalb der Kammer angeordneten Peilstab verbunden. So kann in Abhängigkeit von dem mittels der Volumenmesseinrichtung gemessenen Entnahmevolumen und dem mittels des Peilstabs gemessenen Füllstandes in der Kammer schrittweise die Peiltabelle erstellt werden.

Der Erfindung liegt die Aufgabe zugrunde, eine Auslitervorrichtung, mittels der eine automatisierte Kalibrierung mehrerer Kammern eines Tanks möglich ist, sowie ein optimiertes Verfahren zur Kalibrierung von Kammern eines Tanks zu schaffen.

Diese Aufgabe ist erfindungs gemäß durch die Auslitervorrichtung mit den Merkmalen des Anspruchs 1 gelöst.

Erfindungsgemäß ist also vorgesehen, dass die Versorgungsleitung des Ausliterstandes mit einem Auslauf einer Verteilereinrichtung und die Rücklaufleitung des Ausliterstandes mit einem Zulauf der Verteilereinrichtung verbunden ist und die Verteilereinrichtung mindestens zwei Anschlussleitungen aufweist, die jeweils mittels eines Auslaufsperrventils von dem Auslauf der Verteilereinrichtung und mittels eines Zulaufsperrventils von dem Zulauf der Verteilereinrichtung trennbar ist und die jeweils mit einem Auslass der Kammern des Tanks verbindbar sind.

Durch den Einsatz der Verteilereinrichtung ist es mithin möglich, vor Beginn eines Ausliter- bzw. Kalibrierprozesses mehrere, im Idealfall alle Kammern des Tanks mit jeweils einer Anschlussleitung der Verteilereinrichtung zu kuppeln. Damit kann durch entsprechende Steuerung der Auslaufsperrventile und der Zulaufsperrventile sukzessive eine Kalibrierung der einzelnen Kammern des Tanks durchgeführt werden. Insbesondere kann zunächst eine erste Kammer des Tanks derart kalibriert werden, dass das Zulaufsperrventil, das der dem ersten Tank zugeordneten Anschlussleitung der Verteilereinrichtung zugeordnet ist, geöffnet wird, das dieser Anschlussleitung zugeordnete Auslaufsperrventil geschlossen wird, das einer zweiten Kammer des Tanks zugeordnete Zulaufsperrventil geschlossen wird und das der zweiten Kammer zugeordnete Auslaufsperrventil geöffnet wird. Damit wird die der ersten Kammer entnommene und durch den Ausliterstand strömende Flüssigkeit direkt in die zweite Kammer des Tanks geführt, so dass diese nach dem Ausliterprozess für die erste Kammer befüllt ist und durch entsprechende Schaltung der Auslaufsperrventile und der Zulaufsperrventile für eine Kalibrierung bereitsteht. Die Kalibrierung weiterer Klammern des Tanks kann in entsprechender Weise erfolgen, und zwar dadurch, dass bei der Kalibrierung der zweiten Kammer in dieser enthaltene Flüssigkeit in eine dritte Kammer des Tank gepumpt wird, so dass diese für eine Kalibrierung bereitsteht.

Durch Einsatz der Verteilereinrichtung ist es mithin möglich, ohne weitere Montagearbeiten eine Kalibrierung mehrerer Kammern des Tanks durchzuführen.

Um eine automatisierte Kalibrierung der Kammern des Tanks durchführen zu können, weist die Auslitervorrichtung nach der Erfindung vorzugsweise eine Steuereinrichtung auf, mittels der die Auslaufsperrventile und die Zulaufsperrventile der Verteilereinrichtung schaltbar sind.

Zweckmäßigerweise weist die Steuereinrichtung eine Schnittstelle zum Ansteuern der Auslassventile des Tanks auf.

Um auf Pumpen zur Zufuhr der Flüssigkeit aus den Kammern des Tanks in den Ausliterstand verzichten zu können, sind die Anschlussleitungen der Verteilereinrichtung bei einer vorteilhaften Ausführungsform höher als die Versorgungsleitung des Ausliterstandes angeordnet. Dies kann durch eine entsprechende Unterkonstruktion der Verteilereinrichtung realisiert sein.

Gegebenenfalls ist in der Praxis ein kontinuierliches Gefälle zwischen den Anschlussleitungen der Verteilereinrichtung und der Versorgungsleitung des Ausliterstandes nicht realisierbar. Dies ist beispielsweise der Fall, wenn die Auslässe der Kammern des Tanks entsprechend niedrig angeordnet sind. In diesem Falle kann es erforderlich sein, eine Zusatzpumpe einzusetzen, die stromauf oder stromab der Verteilereinrichtung angeordnet ist und die Flüssigkeit zu der Versorgungsleitung des Ausliterstandes pumpt und als so genannte Heberpumpe wirkt.

Um die Kammern des Tanks über die jeweiligen Auslassventile mit der aus einer zu kalibrierenden Kammer oder einem Vorratstank entnommenen Flüssigkeit befüllen zu können, ist vorzugsweise eine Rücklaufpumpe vorgesehen, die zweckmäßigerweise stromab der Volumenmesseinrichtung angeordnet ist.

Um zu vermeiden, dass bei der mittels der Volumenmesseinrichtung erfolgenden Messung Lufteinschlüsse in fehlerhafter Weise als Flüssigkeitsvolumen mitgemessen werden, weist der Ausliterstand vorzugsweise einen Gasmessverhüter auf, der stromauf eines Volumenzählers angeordnet sein kann. Der Volumenzähler und der Gasmessverhüter bilden beispielsweise die Volumenmesseinrichtung.

Bei der Kalibrierung der Kammern des Tanks ist es erforderlich, jeweils mit einem bis zu einem Grenzfüllstand befüllten Tank die Kalibrierung zu starten. Daher ist bei der Auslitervorrichtung nach der Erfindung für jede der Kammern des Tanks vorzugsweise ein Überfüllschutzsensor vorgesehen, der mit der Steuereinrichtung verbunden ist.

Entsprechend ist es zweckmäßig, dass die Steuereinrichtung mit einer Schnittstelle zur Verbindung mit Peilstäben der Kammern des Tanks versehen ist, so dass die Peilstäbe aller Kammern vor Beginn der Kalibrierung bzw. Ausliterung mit dem Messsystem verbunden werden können und eine automatisierte Kalibrierung möglich ist.

Insbesondere bei Tankkammern mit unterschiedlichem Volumen ist es zweckmäßig, dass ein Vorratsbehälter vorgesehen ist, der entsprechend den Kammern des Tanks mit der Verteilereinrichtung verbunden ist. Durch den Vorratsbehälter kann gewährleistet werden, dass überschüssige Flüssigkeit nicht verworfen werden muss und dass die Kammern des Tanks stets bis zu dem Grenzfüllstand befüllt werden können, und zwar mittels der fertig montierten und installierten Auslitervorrichtung. Der Vorratsbehälter kann mit oder ohne Peistab ausgebildet sein.

Um das Volumen von Rohrleitungen ermitteln zu können, das zwischen einem Bodenventil einer Kammer und einem Anschlussstutzen der betreffenden Kammer vorgesehen ist, weist die Steuereinrichtung ein entsprechendes Mittel auf. Dieses Mittel stellt in der Regel eine Mess- und Steuerroutine dar, die vor oder nach der Ausliterung einer bestimmten Kammer oder vor Beginn bzw. nach Beendigung der Ausliterung sämtlicher Kammern des Tanks erfolgt. Hierbei wird die betreffende Kammer bei Bedarf zumindest so weit befüllt, dass ein bestimmter Füllstand mittels des in der betreffenden Kammer angeordneten Peilstabs messbar ist. Dann wird das Bodenventil dieser Kammer manuell oder automatisiert geschlossen, woraufhin die Leitung ausgepumpt und das Volumen der ausgepumpten Flüssigkeit mit der Volumenmesseinrichtung gemessen wird. Diese Messung, die Teil eines automatisierten Ausliterungsprozesses sein kann, kann also zu einem beliebigen Zeitpunkt erfolgen.

Die Erfindung betrifft auch ein Verfahren zur Kalibrierung von Kammern eines Tanks, die voneinander getrennt sind und jeweils einen Auslass mit einem Auslassventil aufweisen, mittels einer Auslitervorrichtung der vorstehend beschriebenen Art. Bei diesem Verfahren wird eine erste Kammer des Tanks bis zu einem Grenzfüllstand befüllt, wird das Auslassventil der ersten Kammer geöffnet, wird das Zulaufsperrventil der Verteilereinrichtung, welches der Anschlussleitung zugeordnet ist, die mit der befüllten ersten Kammer verbunden ist, geöffnet, wird das Volumen der aus der befüllten ersten Kammer des Tanks über die Verteilereinrichtung durch den Volumenzähler des Ausliterstandes strömenden Flüssigkeit bis zur vollständigen Entleerung der ersten Kammer gemessen und wird die Flüssigkeit aus der ersten Kammer durch die Rücklaufleitung und den Zulauf der Verteilereinrichtung zu einer zweiten Anschlussleitung der Verteilereinrichtung und von dort in eine zweite Kammer rückgeführt. Insbesondere wird das Volumen schrittweise gemessen und jeweils mit einem durch den Peilstab ermittelten Füllstand der ersten Kammer in Korrelation gebracht.

Um überschüssige Flüssigkeit aufnehmen zu können und/oder einzelne Kammern des Tanks vollständig befüllen zu können, ist bei einer vorteilhaften Ausführungsform des Verfahrens nach der Erfindung die Verteilereinrichtung mit einem Vorratstank verbunden.

Die zweite Kammer, in die die Flüssigkeit rückgeführt wird, kann eine Kammer des Tanks oder auch der Vorratstank bilden.

Das Verfahren nach der Erfindung wird zweckmäßigerweise derart durchgeführt, dass nach der vollständigen Entleerung der ersten Kammer und Befüllung einer zweiten Kammer des Tanks bis zu einem Grenzfüllstand eines der Auslaufsperrventile geöffnet wird, welches einer Anschlussleitung zugeordnet ist, die mit der zweiten Kammer des Tanks verbunden ist, so dass die aus der zweiten befüllten Kammer über die Verteilereinrichtung durch die Volumenmesseinrichtung des Ausliterstandes strömende Flüssigkeit hinsichtlich ihres Volumens bis zu einer vollständigen Entleerung der zweiten Kammer gemessen wird und die Flüssigkeit aus der zweiten Kammer durch die Rücklaufleitung des Ausliterstandes und den Zulauf der Verteilereinrichtung zu einer weiteren Anschlussleitung der Verteilereinrichtung zurückgeführt wird. Die weitere Anschlussleitung kann mit einer weiteren Kammer des Tanks oder auch mit dem Vorratsbehälter verbunden sein.

Um die korrekte Durchführung des Verfahrens nach der Erfindung zu gewährleisten, ist es zweckmäßig, wenn während der Entleerung der Kammern eine Überwachung einer Neigungsabweichung des Tanks erfolgt. Sobald die Neigungsabweichung einen bestimmten Grenzwert überschreitet, wird das Verfahren gestoppt.

Weitere Vorteile und vorteilhafte Ausgestaltungen des Gegenstandes der Erfindung sind der Beschreibung, der Zeichnung und den Patentansprüchen entnehmbar.

Ein Ausführungsbeispiel einer Auslitervorrichtung nach der Erfindung ist in der Zeichnung schematisch vereinfacht dargestellt und wird nachfolgend näher erläutert. Es zeigt:
- Figur 1: einen Tank eines Tankfahrzeugs mit mehreren Tankkammern;
- Figur 2: einen Schnitt durch eine Tankkammer in Tankquerrichtung zusammen mit einer Auslitervorrichtung nach der Erfindung;
- Figur 3: eine Verteilereinrichtung der Auslitervorrichtung.

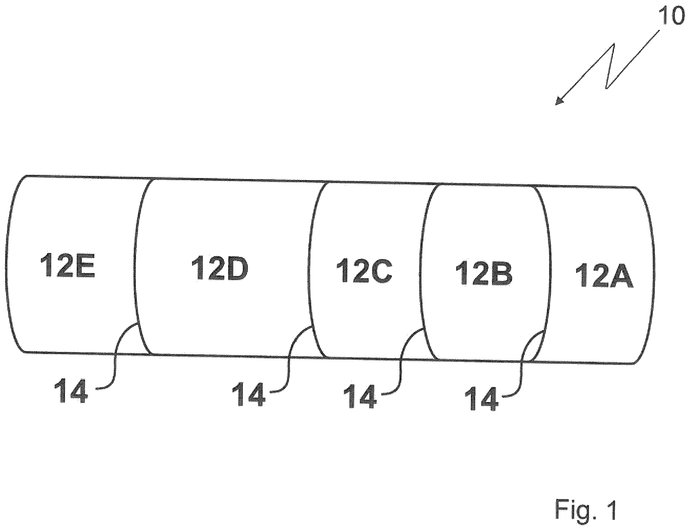

In Figur 1 ist ein als Tank 10 ausgebildeter Container eines Lastkraftwagens bzw. Tankfahrzeugs dargestellt, der fünf Kammern 12A, 12B, 12C, 12D und 12E aufweist, die in Fahrzeuglängsrichtung hintereinander angeordnet sind und jeweils durch eine Trennwand 14 voneinander getrennt sind.

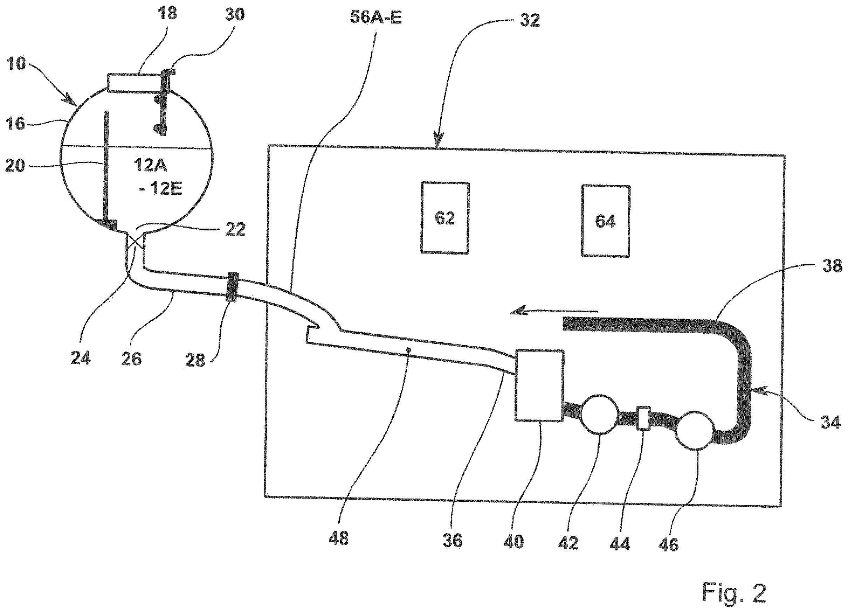

Wie Figur 2 zu entnehmen ist, weist jede Kammer 12A, 12B, 12C, 12D bzw. 12E eine Kammerwand 16 auf, die hier einen im Wesentlichen runden Querschnitt hat und oben mit einer so genannten Domöffnung 18 versehen ist. Die Domöffnung 18 ist in der Regel mit einem Deckel versehen, so dass die betreffende Kammer zu Wartungszwecken durch eine Wartungsperson bestiegen werden kann.

Des Weiteren ist in den Kammern 12A bis 12E jeweils ein Peilstab 20 angeordnet, der eine vertikale Ausrichtung hat und mittels dessen ein Füllstand X einer in der Kammer enthaltenen Flüssigkeit bestimmt werden kann. Der Peilstab 20 ist in üblicher Weise ausgebildet und arbeitet beispielsweise nach dem Schwimmer-, dem Ultraschall-, dem Radar- oder dem Laserprinzip. Mittels des Peilstabs 20 wird der Füllstand statisch gemessen. Die Peilstäbe 20 sind jeweils mit einer hier nicht näher dargestellten Peilcontroller verbunden, der die Messsignale der Peilstäbe ausliest und einen Füllstand X bzw. eine Füllhöhe bereitstellt. In der Regel ist der Peilcontroller fahrzeugseitig vorgesehen.

An ihrem tiefsten Punkt weisen die Kammern 12A bis 12E jeweils einen Auslass 22 auf, der mit einem Auslass- bzw. Bodenventil 24 versehen ist und der über eine Rohrleitung 26 zu einem Anschluss- bzw. Auslassstutzen 28 führt, der als Kupplung zur Entnahme der in der jeweiligen Kammer 12A bis 12E enthaltenen Flüssigkeit durch einen Verbraucher und/oder zur Befüllung der jeweiligen Kammer 12A bis 12E mit Flüssigkeit dient. Das Bodenventil 22 kann also die jeweilige Kammer von der betreffenden Rohrleitung 26 abtrennen. Die Steuerung des Bodenventils 24, das pneumatisch arbeitet, kann über ein fahrzeugseitiges Steuersystem erfolgen.

Zum Auslitern bzw. Kalibrieren der Kammern 12A bis 12E des Tanks 10 wird in deren Domöffnungen 18 jeweils ein Überfüllschutzsensor 30 eingesetzt, der beispielsweise als Schwimmerschalter ausgebildet und für die Dauer der Ausliterung hierin fixiert ist. Der Überfüllschutzsensor 30 erzeugt ein Signal, wenn die betreffende Kammer 12A bis 12E bis zu einem Grenzfüllstand mit Flüssigkeit befüllt ist, bei dem eine Kalibrierung gestartet werden kann.

Gemäß der Erfindung wird zum Auslitern bzw. Kalibrieren der Kammern 12A bis 12E des Tanks 10 eine Auslitervorrichtung 32 eingesetzt, die einen Ausliterstand 34 umfasst, welcher mit einer Versorgungsleitung 36 und einer Rücklaufleitung 38 versehen ist. Stromab der Versorgungsleitung 36 ist ein Gasmessverhüter 40 angeordnet, mittels dessen Gaseinschlüsse der den Gasmesshüter 40 durchströmenden Flüssigkeit entnommen werden können. Stromab des Gasrnessverhüters 40 ist ein Volumenzähler 42 angeordnet, mittels dessen ein den Ausliterstand 34 durchströmendes Flüssigkeitsvolumen ermittelt werden kann. Stromab des Volumenzählers 42 ist wiederum ein Ventil 44 angeordnet, in Abhängigkeit von dessen Schaltstellung ein Ausliterprozess gestoppt bzw. unterbrochen oder gestartet bzw. fortgesetzt werden kann. Des Weiteren umfasst der Ausliterstand 34 zwischen dem Ventil 44 und der Rücklaufleitung 38 eine Pumpe 46, mittels der die Flüssigkeit über die Rücklaufleitung 38 zu einem nachgeschalteten Behälter gepumpt werden kann.

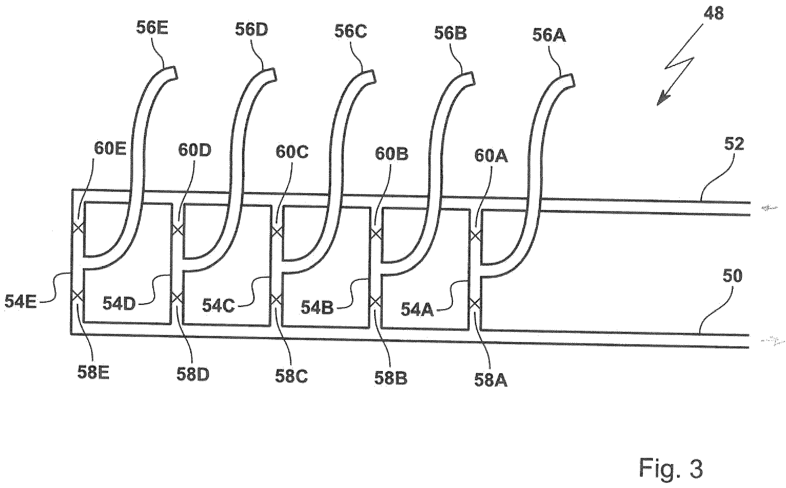

Des Weiteren umfasst die Auslitervorrichtung 32 eine Verteilereinrichtung 48, die in Figur 3 in Alleinstellung dargestellt ist und beim Kalibrieren des Tanks 10 zwischen diesem und dem Ausliterstand 34 angeordnet ist. Die Verteilereinrichtung 48 stellt eine Rohr- und/oder Schlauchkonstruktion dar, die einen Auslauf 50 und einen Zulauf 52 umfasst. Der Auslauf 50 ist mit der Versorgungsleitung 36 des Ausliterstandes 34 verbunden. Der Zulauf 52 ist mit der Rücklaufleitung 38 des Ausliterstandes 34 verbunden. Zwischen dem Auslauf 50 und dem Zulauf 52 sind Verbindungsleitungen 54A bis 54E ausgebildet, von denen jeweils eine Anschlussleitung 56A, 56B, 56C, 56D bzw. 56E abzweigt, die jeweils mit einem Anschlussstutzen 28 der Kammern 12A bis 21 E oder mit einem Vorratsbehälter 64 verbunden werden kann. Zwischen den Anschlussleitungen 56A bis 56E und dem Auslauf 50 der Verteilereinrichtung 48 ist jeweils ein Auslaufsperrventil 58A, 58B, 58C, 58D bzw. 58E angeordnet. Zwischen dem Zulauf 52 und den Anschlussleitungen 56A bis 56E ist in den Verbindungsleitungen 54A bis 54E jeweils ein Zulaufsperrventil 60A, 60B, 60C, 60D bzw. 60E angeordnet.

Die Verteilereinrichtung 48 ist vorzugsweise so angeordnet, dass zwischen den Anschlussstutzen 28 des Tanks 10 und der Versorgungsleitung 36 des Ausliterstandes 34 ein kontinuierliches Gefälle besteht. Gegebenenfalls kann stromauf der Versorgungsleitung 36 eine weitere Pumpe, eine so genannte Heberpumpe eingesetzt sein.

Zudem umfasst die Auslitervorrichtung 32 eine Steuereinrichtung 62, die über entsprechende Schnittstellen mit den Auslaufsperrventilen 58A bis 58E, den Zulaufsperrventilen 60A bis 60E, den Peilstäben 20 der Kammern 12A bis 12E, den Überfülschutzsensoren 30 der Kammern 12A bis 12E, den Bodenventilen 22 der Kammern 12A bis 12E und dem Volumenzähler 42 verbunden ist.

Des Weiteren umfasst die Auslitervorrichtung 32 einen Vorratstank 64, der mit einer optional an der Verteilereinrichtung 48 zusätzlich vorgesehenen sechsten Anschlussleitung verbunden werden kann. Diese sechste Anschlussleitung ist entsprechend den Anschlussleitungen 56A bis 56B mit einer Verbindungsleitung zwischen dem Auslauf 50 und dem Zulauf 52 verbunden und durch ein Auslaufsperrventil von dem Zulauf 50 und ein Zulaufsperrventil von dem Zulauf 52 abtrennbar. Auch diese Sperrventile sind mit der Steuereinrichtung 62 verbunden.

Die Steuereinrichtung 62 kann durch entsprechende Ansteuerung der Sperrventile 58A bis 58E und 60A bis 60E bei einer Kalibrierung der Kammern 12A bis 12E des Tanks 10 frei festlegen, aus welcher der Kammern Flüssigkeit zur Kalibrierung entnommen wird und welche der Kammern im Gegenzug befüllt wird oder ob die der betreffenden Kammer entnommene Flüssigkeit in den Vorratsbehälter 64 geleitet wird.

Die vorstehend beschriebene Auslitervorrichtung arbeitet in nachfolgend beschriebener Weise.

Zum Kalibrieren bzw. Auslitern der Kammern 12A bis 12E wird zunächst eine der Kammern 12A bis 12E bis zu einem Grenzfüllstand mit Flüssigkeit befüllt, der durch ein Signal des jeweiligen Überfüllschutzsensars 30 definiert ist. Im vorliegenden Fall wird zunächst die Kammer 12A befüllt. Die Befüllung kann durch Pumpen der Flüssigkeit aus dem Vorratstank 64 über den Zulauf 52 der Verteilereinrichtung 48, die Verbindungsleitung 54A bei geöffnetem Zulaufsperrventil 60A und geöffnetem Bodenventil 22 der Kammer 12A erfolgen.

Zum Kalibrieren der Kammer 12A werden die Zulaufsperrventile 60A, 60C, 60D und 60E geschlossen. Entsprechend werden die Auslaufsperrventile 58B, 58C, 58D und 58E geschlossen. Auch die zu dem Vorratstank 64 führenden Ventile werden geschlossen. Das ein Auslassventil darstellende Bodenventil 24 der Kammer 12A bleibt oder wird geöffnet. Auch das Bodenventil der Kammer 12B, die mit der Anschlussleitung 56B verbunden ist, wird geöffnet. Damit ist die Kammer 12A als einzige Kammer mit der Versorgungsleitung 36 des Ausliterstandes 34 verbunden, wohingegen die Kammer 12B als einzige Kammer mit der Rücklaufleitung 38 des Ausliterstandes 34 verbunden ist.

Anschließend wird die Ausliterung gestartet, wobei durch Vergleich von verschiedenen Füllständen, die mittels des Peilstabes 20 ermittelt werden, und dem mittels des Volumenzählers 42 gemessenen Flüssigkeitsvolumen eine Peiltabelle schrittweise erstellt wird. Dies erfolgt in vorzugsweise konstanten Höhen- oder Volmnenschritten, so dass jeweils ein Messwertpaar aus mittels des Peilstabs 20 ermittelter Höhe und damit korreliertem Messvolumen bestimmt wird. Die bei der Kalibrierung aus der Kammer 12A entnommene Flüssigkeit wird über die Rücklaufleitung 38 und den Zulauf 52 der Verteilereinrichtung 48 aufgrund der vorstehend genannten Schaltung der Sperrventile 60A bis 60E in die zweite Kammer 12B geleitet. Die Kalibrierung der Kammer 12A ist beendet, wenn diese vollständig entleert ist.

Die gleichzeitige Befüllung der zweiten Kammer 12B erfolgt bis zu einem Ansprechen des Überfüllschutzsensors 30 dieser Kammer. Wenn die aus der ersten Kammer 12A entnommene Flüssigkeit zum Befüllen der Kammer 12B nicht ausreicht, kann zusätzliche Flüssigkeit aus dem Vorratsbehälter 64 entnommen werden. Wenn die zur Befüllung der Kammer 12B erforderliche Flüssigkeitsmenge kleiner ist als die bei der Kalibrierung der Kammer 12A entnommene Flüssigkeit, wird der Überschuss in den Vorratsbehälter 64 geleitet.

Zur Kalibrierung der Kammer 12B werden ausgehend von der für die Kalibrierung der ersten Kammer 12A gewählten Schaltung der Sperrventile 58A bis 58E und 60A bis 60E die Sperrventile 58A und 60B geschlossen und die Sperrventile 58B und 60C geöffnet. Die nachfolgende Kalibrierung der Kammer 12B erfolgt analog zu der Kalibrierung der Kammer 12A, wobei die aus der Kammer 12B entnommene Flüssigkeit direkt in die dritte Kammer 12C geleitet wird.

In vorstehend beschriebener Weise können nacheinander sämtliche Kammern 12A bis 12E des Tanks 10 kalibriert werden. Die Schaltung der Ventile erfolgt bedarfsgerecht mittels der Steuereinrichtung 62.

Gegebenenfalls kann mittels der Steuervorrichtung 62 zusätzlich das Volumen der jeweiligen Rohrleitung 26 der Kammern 12A bis 12E gemessen werden. Dies kann wahlweise jeweils nach, vor oder während der Kalibrierung der betreffenden Kammer oder vor der Kalibrierung aller Kammern oder auch nach Abschluss der Kalibrierung aller Kammern erfolgen. Hierbei werden die Bodenventile 22 der Kammern 12A bis 12E und die Sperrventile 58A bis 58E und 60A bis 60E entsprechend der Kalibrierung der Kammern 12A bis 12E angesteuert. Wenn die betreffende Kammer der zu messenden Rohrleitung 26 nicht zumindest leicht angefüllt ist, so dass mittels des Peilstabes 20 kein Füllstand messbar ist, wird Flüssigkeit in diese Kammer gepumpt, bis der Peilstab 20 ein Messsignal abgibt. Damit ist gewährleistet, dass die betreffende Rohrleitung 26 vollständig gefüllt ist. Anschließend wird das jeweilige Bodenventil 24 geschlossen, so dass die Rohrleitung 26 ausgepumpt und das Volumen des Leitungsinhalts gemessen werden kann.

Zusätzlich kann die Auslitervorrichtung 32 bzw. deren Steuereinrichtung 62 mit einer Signaleinrichtung, wie einer Leuchte oder einem Horn versehen sein, die einem Bediener signalisiert dass ein manueller Eingriff erforderlich ist.

### Bezugszeichenliste

- 10: Tank
- 12A bis E: Kammern
- 14: Trennwand
- 16: Kammerwand
- 18: Domöffnung
- 20: Peilstab
- 22: Auslass
- 24: Auslassventil/Bodenventil
- 26: Rohrleitung
- 2 8: Auslassstutzen/Anschlussstutzen
- 30: Überfüllschutzsensor
- 32: Auslitervorrichtung
- 34: Ausliterstand
- 36: Versorgungsleitung
- 38: Rücklaufleitung
- 40: Gasmessverhüter
- 42: Volumenzähler
- 44: Ventil
- 46: Pumpe
- 48: Verteilereinrichtung
- 50: Auslauf
- 52: Zulauf
- 54A bis E: Verbindungsleitung
- 56A bis E: Anschlussleitung
- 58A bis E: Auslaufsperrventil
- 60A bis E: Zulaufsperrventil
- 62: Steuereinrichtung
- 64: Vorratstank

## Patentansprüche

1. Auslitervorrichtung für einen Tank (10) mit mindestens zwei voneinander getrennten Kammern (12A bis 12E), die jeweils einen Auslass (22) mit einem Auslassventil (24) aufweisen, umfassend einen Ausliterstand (34) mit einer Versorgungsleitung (36), einer Volumenmesseinrichtung (42) und einer Rücklaufleitung (38), **dadurch gekennzeichnet, dass** die Versorgungsleitung (36) des Ausliterstandes (34) mit einem Auslauf (50) einer Verteilereinrichtung (48) und die Rücklaufleitung (38) des Ausliterstandes (34) mit einem Zulauf (52) der Verteilereinrichtung (48) verbunden ist und die Verteilereinrichtung (48) mindestens zwei Anschlussleitungen (56A bis 56E) aufweist, die jeweils mittels eines Auslaufsperrventils (58A bis 58E) von dem Auslauf (50) der Verteilereinrichtung (48) und mittels eines Zulaufsperrventils (60A bis 60E) von dem Zulauf (52) der Verteilereinrichtung (48) trennbar sind und die jeweils mit einem Auslass (22) der Kammern (12A bis 12E) des Tanks (10) verbindbar sind.

2. Auslitervorrichtung nach Anspruch 1, **gekennzeichnet durch** eine Steuereinrichtung (62), mittels der vorzugsweise die Auslaufsperrventile (58A bis 58E) und/oder die Zulaufsperrventile (60A bis 60E) der Verteilereinrichtung (48) schaltbar sind.

3. Auslitervorrichtung nach Anspruch 2, **dadurch gekennzeichnet, dass** die Steuereinrichtung (62) eine Schnittstelle zum Ansteuern der Auslassventile (24) des Tanks aufweist.

4. Auslitervorrichtung nach einem der Ansprüche 1 bis 3, **dadurch gekennzeichnet, dass** die Anschlussleitungen (56A bis 56E) der Verteilereinrichtung (48) höher als die Versorgungsleitung (36) des Ausliterstandes (34) angeordnet ist.

5. Auslitervorrichtung nach einem der Ansprüche 1 bis 4, **dadurch gekennzeichnet, dass** zwischen den Auslässen (22) des Tanks (12) und der Versorgungsleitung (36) des Ausliterstandes (34), insbesondere zwischen dem Auslauf (50) der Verteilereinrichtung (48) und der Versorgungsleitung (36) des Ausliterstandes (34) mindestens eine Heberpumpe angeordnet ist.

6. Auslitervorrichtung nach einem der Ansprüche 1 bis 5, **dadurch gekennzeichnet, dass** der Ausliterstand (34) eine Rücklaufpumpe (48) aufweist, die vorzugsweise stromab der Volumenmesseinrichtung (42) angeordnet ist.

7. Auslitervorrichtung nach einem der Ansprüche 1 bis 6, **dadurch gekennzeichnet, dass** der Ausliterstand (34) stromauf der Volumenmesseinrichtung (42) einen Gasmessverhüter (40) aufweist.

8. Auslitervorrichtung nach Anspruch 2 oder einem der Ansprüche 3 bis 7 in Verbindung mit Anspruch 2, **dadurch gekennzeichnet, dass** für jede der Kammern (12A bis 12E) des Tanks (10) ein Überfüllschutzsensor (30) vorgesehen ist, der mit der Steuereinrichtung (62) verbunden ist.

9. Auslitervorrichtung nach Anspruch 2 oder einem der Ansprüche 3 bis 8 in Verbindung mit Anspruch 2, **dadurch gekennzeichnet, dass** die Steuereinrichtung (62) mit einer Schnittstelle zur Verbindung mit Peilstäben (20) der Kammern (12A bis 12E) des Tanks (10) versehen ist.

10. Auslitervorrichtung nach einem der Ansprüche 1 bis 9, **gekennzeichnet durch** einen Vorratsbehälter (64), der mit der Verteilereinrichtung (48) verbunden ist.

11. Auslitervorrichtung nach Anspruch 2 oder einem der Ansprüche 3 bis 10 in Verbindung mit Anspruch 2, **dadurch gekennzeichnet, dass** die Steuereinrichtung (62) ein Mittel zur Messung eines Volumens von Rohrleitungen (26) aufweist, die den Kammern (12A bis 12E) des Tanks (10) und dem jeweiligen Auslassventil zugeordnet sind.

12. Verfahren zur Kalibrierung von Kammern (12A bis 12E) eines Tanks (10), die voneinander getrennt sind und jeweils einen Auslass (22) mit einem Auslassventil (24) aufweisen, mittels einer Auslitervorrichtung (10) nach einem der Ansprüche 1 bis 11, umfassend folgende Schritte:
a) Befüllen einer ersten Kammer des Tanks bis zu einem Grenzfüllstand;
b) Öffnen des Auslaufsperrventils der Verteilereinrichtung, welches der Anschlussleitung zugeordnet ist, die mit der befüllten ersten Kammer verbunden ist;
c) Messen des Volumens der aus der befüllten ersten Kammer über die Verteilereinrichtung durch die Volumenmesseinrichtung des Ausliterstandes strömenden Flüssigkeit bis zur vollständigen Entleerung der ersten Kammer;
d) Rückführen der Flüssigkeit aus der ersten Kammer durch die Rücklaufleitung und den Zulauf der Verteilereinrichtung zu einer zweiten Anschlussleitung der Verteilereinrichtung, und von dort in eine zweite Kammer der Tanks oder in einen Vorratsbehälter.

13. Verfahren nach Anspruch 12, **dadurch gekennzeichnet, dass** nach der vollständigen Entleerung der ersten Kammer und Befüllung einer zweiten Kammer des Tanks bis zu einem Grenzfüllstand eines der Zulaufsperrventile geöffnet wird, welches einer Anschlussleitung zugeordnet ist, die mit der zweiten Kammer des Tanks verbunden wird, so dass die aus der zweiten befüllten Kammer über die Verteilereinrichtung durch die Volumenmesseinrichtung des Ausliterstandes strömende Flüssigkeit hinsichtlich ihres Volumens bis zu einer vollständigen Entleerung der zweiten Kammer gemessen wird und die Flüssigkeit aus der zweiten Kammer durch die Rücklaufleitung des Ausliterstandes und den Zulauf der Verteilereinrichtung zu einer weiteren Anschlussleitung der Verteilereinrichtung zurückgeführt wird.

14. Verfahren nach Anspruch 12 oder 13, **dadurch gekennzeichnet, dass** während der vollständigen Entleerung der Kammern eine Überwachung einer Neigungsabweichung des Tanks erfolgt.

## Claims

1. A gauging device for a tank (10) having at least two chambers (12A to 12E), which are separated from each other and each comprise a discharge (22) having a discharge valve (24), comprising a gauging unit (34) having a supply pipe (36), a volumetric measuring device (42) and a return pipe (38), **characterized in that** the supply pipe (36) of the gauging unit (34) is connected to an outlet (50) of a distribution device (48) and the return pipe (38) of the gauging unit (34) is connected to an inflow (52) of the distribution device (48) and the distribution device (48) comprises at least two connection pipes (56A to 56E) which can each be separated from the outlet (50) of the distribution device (48) by means of a outlet check valve (58A to 58E) as well as from the inflow (52) of the distribution device (48) by means of an inflow check valve (60A to 60E) and which each can be connected to a discharge (22) of the chambers (12A to 12E) of the tank (10).

2. The gauging device according to claim 1, **characterized by** a controlling device (62), by means of which the outlet check valves (58A to 58E) and/or the inflow check valves (60A to 60E) of the distribution device (48) can preferably be switched.

3. The gauging device according to claim 2, **characterized in that** the controlling device (62) comprises an interface for controlling the discharge valves (24) of the tank.

4. The gauging device according to any one of the claims 1 to 3, **characterized in that** the connecting pipes (56A to 56E) of the distribution device (48) are arranged higher than the supply pipe (36) of the gauging unit (34).

5. The gauging device according to any one of the claims 1 to 4, **characterized in that** at least one siphon pump is arranged between the discharges (22) of the tank (12) and the supply pipe (36) of the gauging unit (34), in particular between the outlet (50) of the distribution device (48) and the supply pipe (36) of the gauging unit (34).

6. The gauging device according to any one of the claims 1 to 5, **characterized in that** the gauging unit (34) comprises a return pump (48) which is preferably arranged downstream from the volumetric measuring device (42).

7. The gauging device according to any one of the claims 1 to 6, **characterized in that** the gauging unit (34) comprises a special gas extractor (40) arranged upstream from the volumetric measuring device (42).

8. The gauging device according to claim 2 or any one of the claims 3 to 7 in combination with claim 2, **characterized in that** an overfill safeguard sensor (30) connected to the controlling device (62) is provided for each of the chambers (12A to 12E) of the tank (10).

9. The gauging device according to claim 2 or any one of the claims 3 to 8 in connection with claim 2, **characterized in that** the controlling device (62) is provided with an interface for connecting to dipsticks (20) of the chambers (12A to 12E) of the tank (10).

10. The gauging device according to any one of the claims 1 to 9, **characterized by** a storage tank (64) connected to the distribution device (48).

11. The gauging device according to claim 2 or any one of the claims 3 to 10 in combination with claim 2, **characterized in that** the controlling device (62) comprises a means for measuring a volume of pipelines (26) which are allocated to the chambers (12A to 12E) of the tank (10) and the corresponding discharge valve.

12. A method for calibrating chambers (12A to 12E) of a tank (10), which are separated from each other and each comprise a discharge (22) having a discharge valve (24), by means of a gauging device (10) according to any one of the claims 1 to 11, comprising the following steps:
a) filling a first chamber of the tank to a threshold filling level;
b) opening the outlet check valve of the distribution device allocated to the connecting pipe connected to the filled first chamber;
c) measuring the volume of the liquid flowing out of the filled first chamber via the distribution device through the volumetric measuring device of the gauging unit until the first chamber has been completely emptied;
d) returning the liquid from the first chamber to a second connecting pipe of the distribution device via the return pipe and the inflow of the distribution device and from there into a second chamber of the tanks or into a storage tank.

13. The method according to claim 12, **characterized in that** one of the inflow check valves, which is allocated to a connecting pipe that will be connected to the second chamber of the tank, is opened after the first chamber has been completely emptied and a second chamber of the tank has been filled to a threshold filling level, so that the liquid flowing from the second filled chamber via the distribution device through the volumetric measuring device of the gauging unit is measured regarding its volume until the second chamber is completely emptied and the liquid from the second chamber is returned to another connecting pipe of the distribution device via the return pipe of the gauging unit and the inflow of the distribution device.

14. The method according to claim 12 or 13, **characterized in that** an incline variance of the tank is monitored while completely emptying the chambers.

## Revendications

1. Dispositif de jaugeage pour un réservoir (10) ayant au moins deux chambres (12A à 12E) séparées l'une de l'autre et chacune comprenant un orifice de décharge (22) ayant une valve de décharge (24), comprenant une unité de jaugeage (34) ayant un conduit d'alimentation (36), un dispositif de mesure volumétrique (42) et un conduit de retour (38), **caractérisé en ce que** le conduit d'alimentation (36) de l'unité de jaugeage (34) est relié à une sortie (50) d'un dispositif de distribution (48) et le conduit de retour (38) de l'unité de jaugeage (34) est relié à une entrée (52) du dispositif de distribution (48) et le dispositif de distribution (48) comprend au moins deux conduits de connexion (56A à 56E) dont chacun peut être séparé de la sortie (50) du dispositif de distribution (48) au moyen d'un clapet anti-retour de sortie (58A à 58E) et de l'entrée (52) du dispositif de distribution (48) au moyen d'un clapet anti-retour d'entrée (60A à 60E) et dont chacun peut être connecté à un orifice de décharge (22) des chambres (12A à 12E) du réservoir (10).

2. Dispositif de jaugeage selon la revendication 1, **caractérisé par** un dispositif de contrôle (62), au moyen duquel les clapets anti-retour de sortie (58A à 58E) et/ou les clapets anti-retour d'entrée (60A à 60E) du dispositif de distribution peuvent être préférablement commutés.

3. Dispositif de jaugeage selon la revendication 2, **caractérisé en ce que** le dispositif de contrôle (62) comprend une interface pour contrôler les valves de décharge (24) du réservoir.

4. Dispositif de jaugeage selon l'une quelconque des revendications 1 à 3, **caractérisé en ce que** les conduits de connexion (56A à 56E) du dispositif de connexion (48) sont disposés plus élevés que le conduit d'alimentation (36) de l'unité de jaugeage (34).

5. Dispositif de jaugeage selon l'une quelconque des revendications 1 à 4, **caractérisé en ce qu'**au moins une pompe à siphon est disposée entre les orifices de décharge (22) du réservoir (12) et le conduit d'alimentation (36) de l'unité de jaugeage (34), en particulier entre la sortie (50) du dispositif de distribution (48) et le conduit d'alimentation (36) de l'unité de jaugeage (34).

6. Dispositif de jaugeage selon l'une quelconque des revendications 1 à 5, **caractérisé en ce que** l'unité de jaugeage (34) comprend une pompe de retour (48) qui est disposée préférablement en aval du dispositif de mesure volumétrique (42).

7. Dispositif de jaugeage selon l'une quelconque des revendications 1 à 6, **caractérisé en ce que** l'unité de jaugeage (34) comprend un purgeur de gaz spécial (40) en amont du dispositif de mesure volumétrique (42).

8. Dispositif de jaugeage selon la revendication 2 ou l'une quelconque des revendications 3 à 7 en combinaison avec la revendication 2, **caractérisé en ce qu'**un senseur de protection anti-débordement (30) connecté au dispositif de contrôle (62) est prévu pour chacune des chambres (12A à 12E) du réservoir (10).

9. Dispositif de jaugeage selon la revendication 2 ou l'une quelconque des revendications 3 à 8 en combinaison avec la revendication 2, caractérisé en que le dispositif de contrôle (62) est pourvu avec une interface pour la liaison à des jauges (20) des chambres (12A à 12E) du réservoir (10).

10. Dispositif de jaugeage selon l'une quelconque des revendications 1 à 9, **caractérisé par** un réservoir de stockage (64) qui est relié au dispositif de distribution (48).

11. Dispositif de jaugeage selon la revendication 2 ou l'une quelconque des revendications 3 à 10 en combinaison avec la revendication 2, **caractérisé en ce que** le dispositif de contrôle (62) comprend un moyen pour mesurer un volume des conduites (26) qui sont attribués aux chambres (12A à 12E) du réservoir (10) et la valve de décharge correspondante.

12. Procédé pour calibrer des chambres (12A à 12E) d'un réservoir (10), qui sont séparées l'un à l'autre et chacun comprennent un orifice de décharge (22) ayant une valve de décharge (24), au moyen d'un dispositif de jaugeage (10) selon l'une quelconque revendications 1 à 11, comprenant des étapes suivants :
a) remplir une première chambre du réservoir à un niveau de remplissage limite ;
b) ouvrir le clapet non-retour de sortie du dispositif de distribution attribué au conduit de connexion qui est relié à la première chambre rempliée ;
c) mesurer un volume du liquide s'écoulant de la première chambre rempliée par le dispositif de distribution à travers le dispositif de mesure volumétrique de l'unité de jaugeage jusqu'à ce que la chambre est complètement vidée ;
d) retourner le liquide de la première chambre par le conduit de retour et l'entrée du dispositif de distribution à un deuxième conduit de connexion du dispositif de distribution et de là dans une deuxième chambre du réservoir ou dans un réservoir de stockage.

13. Procédé selon la revendications 12, **caractérisé en ce qu'**un des clapets non-retour d'entrée est ouvert après la première chambre a été complètement vidée et une deuxième chambre du réservoir a été rempliée à un niveau de remplissage limite, ledit clapet non-retour d'entrée étant attribué à un conduit de connexion étant relié à la deuxième chambre du réservoir, de sorte que le liquide s'écoulant à partir de la deuxième chambre rempliée par le dispositif de distribution à travers le dispositif de mesure volumétrique de l'unité de jaugeage est mesuré en regard de son volume jusqu'à ce que la deuxième chambre est complètement vidée et le liquide de la deuxième chambre est retourné à un outre conduit de connexion du dispositif de distribution par le conduit de retour de l'unité de jaugeage et l'entrée du dispositif de distribution.

14. Procédé selon la revendication 12 ou 13, **caractérisé en ce qu'**une surveillance d'une divergence d'inclinaison du réservoir est surveillée lors de la vidange complète des chambres.
